# EUROPÄISCHE PATENTSCHRIFT

(11) **EP 2 588 912 B1**
(45) Veröffentlichungstag und Bekanntmachung des Hinweises auf die Patenterteilung: **06.08.2014**
(21) Anmeldenummer: 11732398.0
(22) Anmeldetag: 16.06.2011
(51) Int. Cl.: G02B 21/26

(54) **KREUZTISCH FÜR MIKROSKOPE**
X-Y STAGE FOR MICROSCOPES
PLATINE À CHARIOTS CROISÉS POUR MICROSCOPES

(30) Priorität: 03.07.2010 DE 102010026030
(43) Veröffentlichungstag der Anmeldung: 08.05.2013
(73) Patentinhaber: Carl Zeiss Microscopy GmbH, 07745 Jena (DE)
(72) Erfinder: BENDLIN, Cornelia, 37085 Goettingen (DE); SCHNUELL, Peter, 37130 Gleichen (DE)
(74) Vertreter: Geyer, Fehners & Partner
(86) Internationale Anmeldenummer: PCT/EP2011/060029
(87) Internationale Veröffentlichungsnummer: WO 2012/004105

(56) Entgegenhaltungen:
- DE-A1- 19 532 008
- DE-C- 122 481
- DE-C1- 3 521 047
- US-A- 4 557 568
- US-A1- 2006 187 543

## Beschreibung

### Gebiet der Erfindung

Kreuztische werden in der professionellen Mikroskopie verwendet, da sie eine hochpräzise Verschiebung eines auf dem Tisch fixierten Objektträgers erlauben, wobei die Verschiebung in den beiden die Tischebene aufspannenden Koordinaten X,Y unabhängig von einander eingestellt werden kann. Ein solcher Kreuztisch umfasst in der Regel eine dreiteilige Tischplatte, nämlich eine Basistischplatte, eine Zwischentischplatte und ein Obertischelement. Das Obertischelement ist dabei in einer ersten Führung in der Zwischentischplatte entlang einer ersten Achse X verschiebbar gelagert. Die Zwischentischplatte wiederum ist in einer zweiten Führung in der Basistischplatte entlang einer zweiten Achse Y verschiebbar gelagert. Die beiden Achsen X und Y schließen einen von 0° verschiedenen Winkel, in der Regel 90° ein. Ein solcher Kreuztisch umfasst weiterhin einen mechanischen, d.h. nicht motorisch angetriebenen Tischtrieb, der im wesentlichen zwei Komponenten umfasst. Zum einen umfasst der Tischtrieb einen Obertischelementantrieb und einen damit gekoppelten Obertischelementabtrieb für die Verschiebung des Obertischelements. Zum anderen umfasst der Tischtrieb auch einen Zwischentischplattenantrieb und einen damit gekoppelten Zwischentischplattenabtrieb. Mit dem Obertischelementantrieb ist eine erste Triebrichtung und mit dem Zwischentischplattenantrieb eine zweite Triebrichtung vorgebbar. Wird als Tischtrieb ein üblicherweise verwendeter Koaxialtrieb verwendet, der eine Welle antreibt, so ist die Triebrichtung die Drehrichtung der Welle, im Querschnitt also entweder im oder gegen den Uhrzeigersinn.

Außerdem umfasst ein solcher Kreuztisch erste Kopplungsmittel zur Kopplung des Obertischelementabtriebs mit dem Obertischelement. Mittels der ersten Kopplungsmittel ist das Obertischelement dann entlang der ersten Achse in einer ersten Verschiebungsrichtung verschiebbar, und zwar in Abhängigkeit von der ersten Triebrichtung. Die Triebrichtung bzw. der Drehsinn des Triebs oder der Welle gibt also vor, in welcher Richtung das Obertischelement entlang der x-Achse verschoben wird. Ohne die Kopplungsmittel kann eine solche Verschiebung nicht stattfinden. Entsprechend umfasst der Kreuztisch auch zweite Kopplungsmittel zur Kopplung des Zwischentischplattenabtriebs mit der Zwischentischplatte, mittels derer die Zwischentischplatte in Abhängigkeit von der zweiten Triebrichtung entlang der Achse Y in einer zweiten Verschiebungsrichtung verschiebbar ist.

Das Obertischelement kann dabei entsprechend der üblicherweise gebräuchlichen Varianten ausgestaltet sein. So ist es in einer Ausgestaltung als Obertischplatte ausgestaltet, so dass der Kreuztisch insgesamt aus drei Tischplatten in verschiedenen Ebenen zusammengesetzt ist. Die Obertischplatte wird dabei in der Regel auf zwei Seiten in einer Führung geführt.

Eine ebenfalls gebräuchliche Variante ist die Ausgestaltung des Obertischelements als Obertischleiste. Diese kann mit einem - auch auswechselbar ausgestaltbaren - Objektführer verbunden werden. Die Obertischleiste wird in einer auf der Zwischentischplatte fest montierten Führung geführt, und die Bewegung entlang der x-Achse erfolgt mittels der angetriebenen Obertischleiste entlang der Führung. Der Objektführer selbst weist Aufnahme- und Haltemittel für einen Objektträger mit einem zu untersuchenden Präparat auf. Gegenüber der Ausgestaltung mit einer Obertischplatte ist der Aufbau einfacher, da anstelle einer in zwei Führungen gelagerten Obertischplatte nur eine Obertischleiste verwendet werden muss, in der ein Objektführer geführt werden kann.

Die Basis-, Zwischen- und Obertischplatten können auch in verschiedenen Ausführungen zur Verfügung gestellt werden. So werden für Untersuchungen von Proben mit Durchlichtbeleuchtung Tischplatten mit Öffnungen verwendet, durch die das Licht von der einen Seite durch die Probe hindurchtreten kann und das von der Probe ausgehende - beispielsweise transmittierte, gestreute oder gebeugte - Licht beobachtet oder detektiert wird. Soll eine Probe im Auflicht untersucht und das von der Probe kommende - beispielsweise das von der Probe reflektierte oder nach Anregung emittierte Licht - beobachtet oder detektiert werden, sind diese Öffnungen nicht nötig, da sich Beleuchtungs- und Beobachtungsstrahlengang auf der gleichen Seite der Probe befinden. Die Tischplatten können dann ohne solche Öffnungen ausgestaltet sein, ggf. können aber auch die Öffnungen verschließbar sein, so dass die Tischplatten für beide Arten der mikroskopischen Untersuchung geeignet sind. Auch reicht es für die Auflichtbeleuchtung aus, wenn nur eine der Tischplatten verschlossen bzw. ohne Öffnung ausgestaltet ist.

Kreuztische für Mikroskope sind aus den Druckschriften US 4 557 568 A, US 2006/187543 A1, DE 122 481 C, DE 195 32 998 A1 und DE 35 21 047 C1 bekannt.

Nun gibt es in der Mikroskopie verschiedene Arten von Anwendungen, die im wesentlichen in zwei Kategorien eingeteilt werden können, nämlich biomedizinische Anwendungen und solche Anwendungen, bei denen materialwissenschaftliche Aspekte im Vordergrund stehen. Für beide Arten von Anwendungen unterscheiden sich die bevorzugten Bildlagen bei den verwendeten Tuben. Für biomedizinische Anwendungen werden in der Regel Tuben mit einer sogenannten "invertierten" Bildlage eingesetzt, die das Präparat seitenverkehrt - einer Vertauschung von links und rechts entsprechend - und auf dem Kopf - einer Vertauschung von oben und unten entsprechend - darstellen. Tuben für materialwissenschaftliche Anwendungen zeigen die Präparate dagegen aufrecht und seitenrichtig. Gerade bei höherer Mikroskopvergrößerung sind nur kleine Ausschnitte eines Präparates im Gesichtsfeld sichtbar, so dass die Präparate mit Hilfe von Kreuztischen durch das Gesichtsfeld bewegt werden müssen.

Mit einiger Routine führt die gewohnte Bildlage, also entweder die in biomedizinischen Anwendungen oder die in der Materialwissenschaft verwendete Bildlage - des Tubus zu einer routinierten Handhabung bei der Tischbewegung, die die mikroskopische Abbildung des Präparates in der erwarteten Weise im Sehfeld verschiebt. Wird jedoch entgegen der Gewohnheit ein Tubus mit um 180° gedrehter Bildlage eingesetzt, so ist eine entsprechende Umgewöhnung bei der Tischbewegung erforderlich, die die Arbeit am Mikroskop behindert und verlangsamt.

Da Mikroskoptuben - insbesondere solche mit praktischen und vom Benutzer geschätzten Ergofunktionen wie beispielsweise Einblickshöhen- oder Einblickswinkelverstellung - aufgrund ausgeklügelter optischer und konstruktiver Konzepte nicht in einfacher Weise umgestellt werden können, um beide Bildlagen anzubieten, ergibt sich bei einem - beispielsweise aus ergonomischen Gründen - bevorzugten Tubus mit einer bestimmten Bildlage entweder für die Anwender aus dem biomedizinischen Bereich oder für die Anwender aus dem materialwissenschaftlichen Bereich das Problem der ungewohnten Präparatverstellung am Mikroskoptisch.

### Beschreibung der Erfindung

Der Erfindung liegt daher die Aufgabe zugrunde, einem Benutzer eine einfache Möglichkeit zu geben, die Verschiebung des auf dem Kreuztisch mittels eines Objektträgers fixierten Präparats an den verwendeten Tubus so anzupassen, dass sowohl bei Tuben mit aufrechter und seitenrichtiger als auch bei solchen mit invertierter Bildlage die gewohnten Bewegungsmuster, insbesondere also die Drehung des Koaxialtriebes, beibehalten werden können.

Diese Aufgabe wird bei einem Kreuztisch der eingangs beschriebenen Art dadurch gelöst, dass mechanische erste Umschaltmittel zur Umkehrung der ersten Verschiebungsrichtung bei konstanter erster Triebrichtung und/oder mechanische zweite Umschaltmittel zum Umkehrung der zweiten Verschiebungsrichtung bei konstanter zweiter Triebrichtung vorgesehen sind. Der Kreuztisch weist also zusätzlich noch die genannten Umschaltmittel auf, die zwischen dem jeweiligen Abtrieb und der zugehörigen Tischplatte angeordnet sind. Ein Benutzer muss bei Wechsel des Tubus nur die Umschaltmittel betätigen, um die Verschiebungsrichtung nach seinem Wunsch umzukehren. Die ersten und zweiten Umschaltmittel sind wie der Tischtrieb mechanischer Natur, d.h. von Hand zu bedienen und nicht motorisch angetrieben.

Die ersten und zweiten Umschaltmittel können dabei Teil der Kopplungsmittel sein, sie können allerdings auch Teil des jeweiligen Abtriebs sein, oder auch Teile von beiden sein.

In einer bevorzugten Ausgestaltung der Erfindung umfassen der Obertischelementabtrieb und der Zwischentischplattenabtrieb jeweils ein Zahnrad. Dieses Zahnrad ist dann beispielsweise auf der Welle des Koaxialtriebs fest angeordnet. Die ersten Kopplungsmittel umfassen dann zwei Zahnstangen zum Eingriff in das Zahnrad. Mittels der ersten Umschaltmittel kann dann entweder die eine oder die andere der beiden Zahnstangen zum Eingriff in das eine Zahnrad gebracht werden. Entsprechend umfassen auch die zweiten Kopplungsmittel zwei Zahnstangen zum Eingriff in das andere Zahnrad, wobei mittels der zweiten Umschaltmittel entweder die eine oder die andere der beiden Zahnstangen zum Eingriff gebracht werden kann. Alternativ und äquivalent lassen sich anstelle von Zahnrad-/Zahnstangensystemen auch solche mit Reibrädern, die auf entsprechenden Reibflächen laufen, verwenden.

Das Zahnrad ist dabei zwischen den beiden Zahnstangen angeordnet, so dass bei gleichbleibendem Drehsinn des Zahnrades die Zahnstangen in entgegengesetzte Verschiebungsrichtungen verschoben werden. Die Zahnstangen sind dabei mit dem Obertischelement oder der Zwischentischplatte gekoppelt, je nachdem welche der beiden Zahnstangen jeweils in das Zahnrad eingreift, wird die Zwischentischplatte bzw. das Obertischelement in die eine oder in die andere, entgegengesetzte Richtung verschoben.

Eine Möglichkeit der Realisierung der Umschaltung zwischen den beiden Zahnstangen besteht darin, die jeweils zweite Zahnstange - also sowohl für das Obertischelement als auch für die Zwischentischplatte - einander gegenüberliegend auf einem Träger in Form eines Schlittens in einer Schlittenführung anzuordnen. Die Umschaltmittel umfassen dabei einen oder mehrere Hebel, mittels derer der Schlitten in der Schlittenführung verschiebbar ist, so dass entweder die eine oder die andere Zahnstange zum Eingriff in das Zahnrad gebracht werden kann. Der Hebel kann dabei von Hand gesteuert werden, es ist aber durchaus möglich, die Umschaltmittel entsprechend so auszugestalten, dass eine automatische Hebelumlegung bei entsprechender Auswahl eines entsprechenden Tubus erfolgt. Der oder die Hebel sollen dabei so ausgestaltet sein, dass eine unbeabsichtigte Rückstellung verhindert wird, wozu beispielsweise entsprechende Federelemente verwendet werden können. Anstelle von Zahnrädern können, wie oben schon erwähnt, auch Reibräder und entsprechende Reibflächen verwendet werden.

Eine andere Möglichkeit zur Realisierung der Umschaltmittel besteht darin, die jeweils zwei Zahnstangen auf einem um einen Drehpunkt schwenkbaren Träger einander gegenüberliegend anzuordnen, so dass sich das Zahnrad zwischen den beiden Zahnstangen befindet, wobei die Umschaltmittel dann einen oder mehrere Hebel umfassen, mittels deren der Träger geschwenkt wird. Ein solcher Träger mit zwei Zahnstangen und entsprechendem Hebelsystem kann dabei sowohl für das Obertischelement als auch für die Zwischentischplatte verwendet werden. Die verschiedenen Ausführungsformen lassen sich natürlich auch problemlos miteinander kombinieren.

Alternativ zur Verwendung von einem Zahnrad und zwei Zahnstangen, zwischen denen sich das Zahnrad befindet, lassen sich auch zwei Zahnräder und eine Zahnstange verwenden. Dazu weisen der Obertischelementabtrieb und der Zwischentischplattenabtrieb jeweils ein auf einer Abtriebsachse des Obertischelementabtriebs bzw. des Zwischentischplattenabtriebs angeordnetes Abtriebszahnrad auf. Die ersten und zweiten Kopplungsmittel umfassen jeweils eine Zahnstange zum Eingriff in das jeweilige Abtriebszahnrad. Die ersten und zweiten Umschaltmittel umfassen dann jeweils ein auf einer der jeweiligen Abtriebsachse parallelen Achse angeordnetes Zwischenzahnrad, welches zwischen das Abtriebszahnrad und die Zahnstange zur Umkehrung der entsprechenden Verschiebungsrichtung einbringbar ist. Greift das Abtriebszahnrad direkt in die Zahnstange ein, so bewegt sich diese bzw. die daran befindliche Tischplatte entsprechend der von der Triebrichtung des Abtriebszahnrades vorgegebenen Verschiebungsrichtung. Wird zwischen Zahnstange und Abtriebszahnrad ein Zwischenzahnrad eingebracht, so kehrt dieses die Bewegungsrichtung der Zahnstange um, bei gleichbleibender Triebrichtung des Abtriebszahnrades. Mittels eines entsprechenden Hebelsystems kann das Zwischenzahnrad zwischen Abtriebszahnrad und Zahnstange eingebracht werden.

Anstelle von einem System aus Zahnstangen und Zahnrädern bzw. Reibflächen und Reibrädern lassen sich auch auf Seilzügen basierende Konstruktionen verwenden. In einer solchen Ausgestaltung umfassen die ersten und die zweiten Kopplungsmittel jeweils zwei auf eine Abtriebsachse des Obertischelementabtriebs bzw. des Zwischentischplattenabtriebs frei um die jeweilige Abtriebsachse drehbar gelagerte Abtriebsseilrollen. Der Obertischelementabtrieb und der Zwischentischplattenabtrieb weisen auf der jeweiligen Abtriebsachse eine Kupplung zum Kuppeln an wahlweise genau eine der beiden Abtriebsseilrollen auf. Mit Hilfe der Kupplung wird die Triebrichtung bzw. Drehrichtung der Abtriebsachse entweder auf die eine oder die andere Abtriebsseilrolle übertragen. Solche Einrichtungen sind für beide beweglichen Tischplatten vorzusehen. In beiden Fällen ist jede der beiden Abtriebsrollen auf der jeweiligen Abtriebsachse über eine Seilschlinge mit je einer Seilrolle, die Teil eines Verschiebemechanismus zur Verschiebung des Obertischelements bzw. der Zwischentischplatte ist, verbunden. Eine der beiden Seilschlingen ist dabei gerade und die andere gekreuzt angeordnet. Auf diese Weise ist über die eine der beiden Abtriebsseilrollen eine gegensinnige Drehung und durch die andere der beiden Abtriebsseilrollen eine gleichsinnige Drehung auf die jeweilige Seilrolle übertragbar. Durch Betätigung der Kupplung ist dann die erste bzw. die zweite Verschiebungsrichtung umkehrbar.

Alternativ zu den eben beschriebenen Anordnungen, bei denen sich die Triebrichtung nicht ändert, sind auch solche Konstruktionen denkbar, bei denen über eine entsprechende Ausgestaltung der Kopplung zwischen Antrieb und Abtrieb - sowohl für das Obertischelement als auch für die Zwischentischplatte - eine Umkehrung der Triebrichtung einstellbar ist, wenn die Kopplung beispielsweise nach Art eines Getriebes mit einem Rückwärtsgang ausgestaltet ist, was sich beispielsweise bei einer Zahnradkupplung durch die Einbringung eines zusätzlichen Zahnrades erreichen lässt. Die Ansteuerung einer solchen Kupplung kann händisch - mechanisch, elektromotorisch oder elektronisch - oder automatisch in Abhängigkeit vom gewählten Tubus erfolgen.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen. Die verschiedenen Mechanismen lassen sich ohne weiteres miteinander kombinieren, so dass beispielsweise für das Obertischelement und die Zwischentischplatte verschiedene Umschalt- und/oder Kopplungsmittel verwendet werden. Selbstverständlich ist es auch möglich und im Rahmen der Erfindung, entweder nur die Zwischentischplatte oder nur das Obertischelement mit Umschaltmitteln zu versehen.

### Kurze Beschreibung der Zeichnungen

Nachfolgend wird die Erfindung beispielhaft anhand der beigefügten Zeichnungen, die auch erfindungswesentliche Merkmale offenbaren, noch näher erläutert. Es zeigen:
- Fig.1: einen Kreuztisch mit einer ersten Ausgestaltung von Umschaltmitteln,
- Fig.2: einen Kreuztisch mit einer zweiten Ausgestaltung von Umschaltmitteln,
- Fig.3: einen Kreuztisch mit einer dritten Ausgestaltung von Umschaltmitteln,
- Fig.4: einen Kreuztisch mit einer vierten Ausgestaltung von Umschaltmitteln,
- Fig.5: eine alternative Ausgestaltung zur Umkehrung der Verschiebungsrichtung,
- Fig.6: ein Detail der in Fig. 5 dargestellten Ausführung, und
- Fig.7: das Prinzip eines Umschaltmechanismus basierend auf der Verwendung von zwei Zahn- oder Reibrädern.

### Ausführliche Beschreibung der Zeichnungen

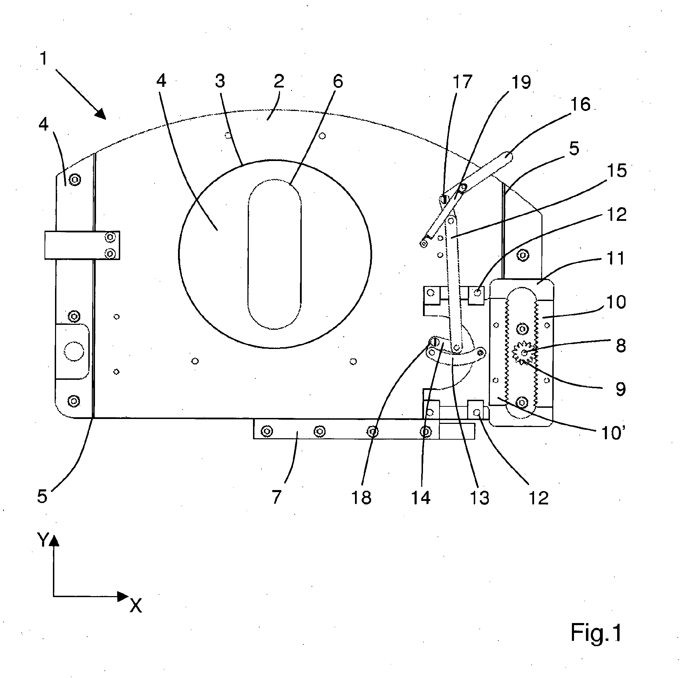

In Fig.1 ist ein typischer Kreuztisch 1 für Mikroskope in der Ansicht von unten dargestellt. Der Kreuztisch 1 umfasst eine Basistischplatte 2 mit einer großen Öffnung 3. Auf der Basistischplatte 2 ist eine Zwischentischplatte 4 in einer zweiten Führung 5 in der Basistischplatte 2 entlang einer zweiten Achse Y verschiebbar gelagert. In Blickrichtung befindet sich die Zwischentischplatte 4 hinter der Basistischplatte 2. Die Zwischentischplatte 4 wiederum weist ebenfalls eine Öffnung 6 auf. Über der Öffnung 6 ist in der Regel das hier nicht gezeigte Präparat auf einem Objektträger angeordnet, durch die Öffnungen tritt Licht zur Beleuchtung oder Manipulation des Präparats hindurch. Der Objektträger kann beispielsweise von einem Objektführer umfasst sein, der mit einem Obertischelement 7 verbunden ist, wenn dieses, wie in der hier gezeigten Ausführung, als Obertischleiste ausgestaltet ist. Die Obertischleiste selbst ist in einer nicht gezeigten ersten Führung in der Zwischentischplatte 4 entlang einer ersten Achse X verschiebbar gelagert. Statt einer Obertischleiste kann auch eine Obertischplatte verwendet werden, auf der der Objektträger dann direkt fixiert werden kann. Die erste Achse X schließt mit der zweiten Achse Y einen von Null verschiedenen Winkel ein, üblicherweise 90°. Der Kreuztisch 1 umfasst außerdem einen - nicht vollständig dargestellten - mechanischen Tischtrieb, welcher sowohl einen Trieb für die Obertischleiste als auch einen Trieb für die Zwischentischplatte 4 umfasst. Der Trieb für die Obertischleiste umfasst einen Obertischelementantrieb und einen damit gekoppelten Obertischelementabtrieb. Der Trieb für die Zwischentischplatte 4 umfasst einen Zwischentischplattenantrieb und einen damit gekoppelten Zwischentischplattenabtrieb, der Zwischentischplattenabtrieb ist im Beispiel als Welle mit einer Abtriebsachse 8 ausgestaltet. Entsprechend ist auch der nicht gezeigte Obertischelementabtrieb ausgestaltet.

Mit dem Obertischelementantrieb wird eine erste Triebrichtung vorgegeben, mit dem Zwischentischplattenantrieb eine zweite Triebrichtung. Die Triebrichtung entspricht im dargestellten Fall der Drehrichtung der Welle auf der Abtriebsachse 8.

Außerdem sind erste Kopplungsmittel zur Kopplung des Obertischelementabtriebs mit der Obertischleiste vorgesehen, mittels derer die Obertischleiste in Abhängigkeit von der ersten Triebrichtung entlang der ersten Achse X in einer ersten Verschiebungsrichtung verschiebbar ist. Zudem sind zweite Kopplungsmittel zur Kopplung des Zwischentischplattenabtriebs mit der Zwischentischplatte 4 vorgesehen, mittels derer die Zwischentischplatte 4 in Abhängigkeit von der zweiten Triebrichtung entlang der zweiten Achse Y in der zweiten Verschiebungsrichtung verschiebbar ist.

Der Kreuztisch 1 weist außerdem mechanische erste Umschaltmittel zur Umkehrung der ersten Verschiebungsrichtung bei konstanter erster Triebrichtung und mechanische zweite Umschaltmittel zur Umkehrung der zweiten Verschiebungsrichtung bei konstanter zweiter Triebrichtung auf. Die Umschaltmittel sind mechanisch ausgelegt, d.h. von Hand zu bedienein, und nicht motorisch angetrieben. Durch Verwendung dieser Umschaltmittel wird es einem Benutzer ermöglicht, eingeübte Bewegungsroutinen beizubehalten, auch wenn zwischen verschiedenartig abbildenden Tuben mit "aufrechter" Bildlage und solchen mit "invertierter" Bildlage gewechselt wird. Der Benutzer muss nur dafür sorgen, dass die Umschaltmittel entsprechend betätigt werden, so dass die Verschiebungsrichtung umgekehrt wird, sofern dies nicht automatisch beim Wechsel des Tubus passiert.

In der in Fig.1 gezeigten Ausführung sind die ersten Umschaltmittel Teil der ersten Kopplungsmittel, die zweiten Umschaltmittel Teil der zweiten Kopplungsmittel. Dargestellt sind allerdings nur die zweiten Kopplungsmittel bzw. Umschaltmittel, die für die Verschiebung der Zwischentischplatte 4 notwendig sind. Hierbei ist auf der Abtriebsachse 8 des Zwischentischplattenabtriebs ein Zahnrad 9 fest angeordnet, welches sich entsprechend der zweiten Triebrichtung dreht. Ein entsprechendes Zahnrad umfasst auch der Obertischelementabtrieb. Die zweiten Kopplungsmittel umfassen zwei Zahnstangen 10 und 10' zum Eingriff in das Zahnrad 9. Entsprechende Zahnstangen finden sich auch bei den ersten Kopplungsmitteln. Die beiden Zahnstangen liegen einander auf einem Schlitten 11 gegenüber, zwischen ihnen befindet sich das Zahnrad 9. Der Schlitten 11 ist in einer Schlittenführung 12 verschiebbar gelagert.

Die Umschaltmittel umfassen ein System von Hebeln 13, 14, 15 und 16, mittels der der Schlitten 11 zwischen seinen Endlagen bewegt werden kann, indem sich der Hebel 16 beim Umschalten um einen Drehpunkt 17 bewegt und Hebel 14 durch Drehung um einen weiteren Drehpunkt 18 den Hebel 13 verschiebt. Ein Federelement 19 sorgt dafür, dass die Endlagen nach Umschalten der Verschiebungsrichtung mittels des Hebels 16 zuverlässig gehalten werden. In jeder Endlage befindet sich jeweils nur eine der beiden Zahnstangen 10 oder 10' mit dem Zahnrad 9 im Eingriff. Durch die gegenüberliegende Anordnung der Zahnstangen 10 und 10' erfolgt die Bewegung der Zwischentischplatte 4 nach Umschaltung des Hebels 16 jeweils in entgegengesetzter Richtung, ohne dass sich die zweite Triebrichtung ändert. Ein entsprechender Mechanismus ist auch für die Obertischleiste 7 vorgesehen.

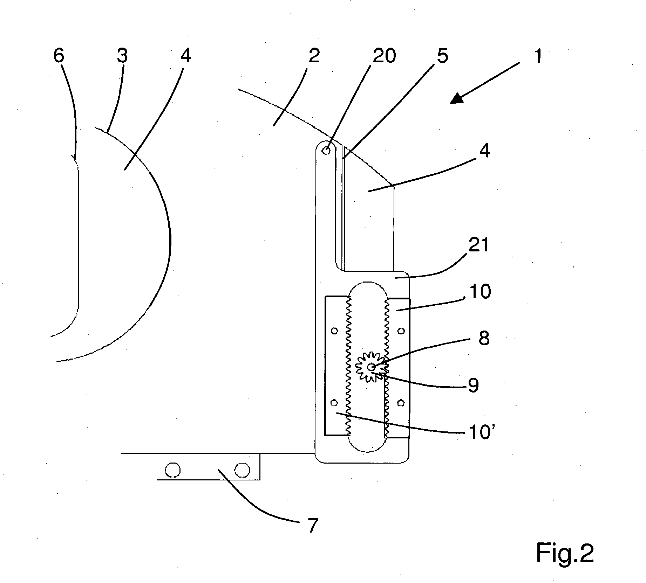

In Fig.2 ist eine etwas andere Ausgestaltung der zweiten Kopplungs- und Umschaltmittel dargestellt. Hier sind die beiden Zahnstangen 10, 10' auf einem um einen Drehpunkt 20 schwenkbaren Träger 21 einander gegenüberliegend angeordnet. Die Umschaltmittel können analog zu Fig.1 - hier jedoch nicht gesondert dargestellt - ebenfalls wieder einen oder mehrere Hebel umfassen, mittels derer der Träger 21 schwenkbar ist. Außerdem kann wieder ein Federelement vorgesehen sein, mit dem der Träger 21 in den jeweiligen Endlagen-die Lagen, in denen entweder die eine Zahnstange 10 oder die andere Zahnstange 10' mit den Zahnrad 9 in Eingriff steht - gehalten wird. In bezug auf den Obertischelementabtrieb und die Verschiebung der Obertischleiste sind entsprechende, gleichartige Mittel vorgesehen. Auch hier erfolgt durch die Betätigung der entsprechenden Hebel eine Umkehrung der ersten Verschiebungsrichtung bei konstanter erster Triebrichtung.

Auch eine Kombination der beiden Ausgestaltungen in den Figuren 1 und 2 derart, dass beispielsweise für die Verschiebung des Obertischelements 7 ein Mechanismus, wie er in Fig.1 dargestellt ist, und für die Verschiebung der Zwischentischplatte ein Mechanismus, wie er in Fig.2 dargestellt ist, verwendet wird, ist möglich.

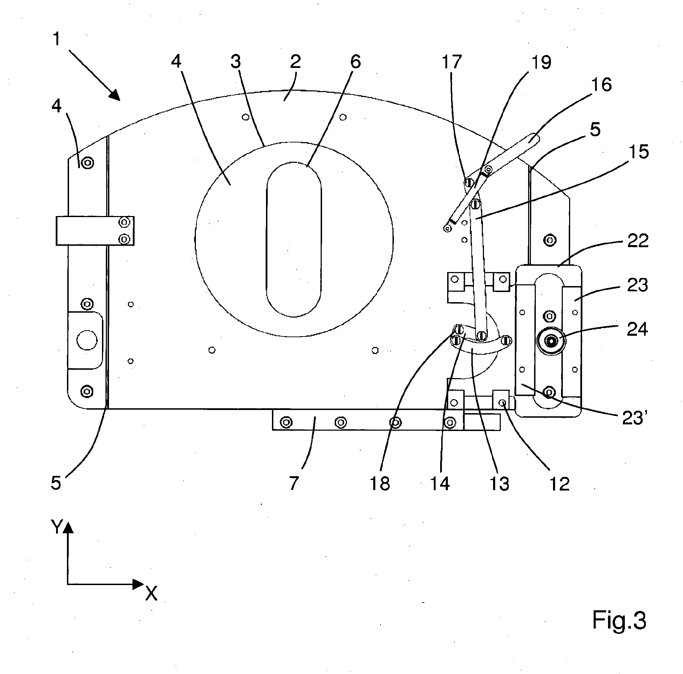

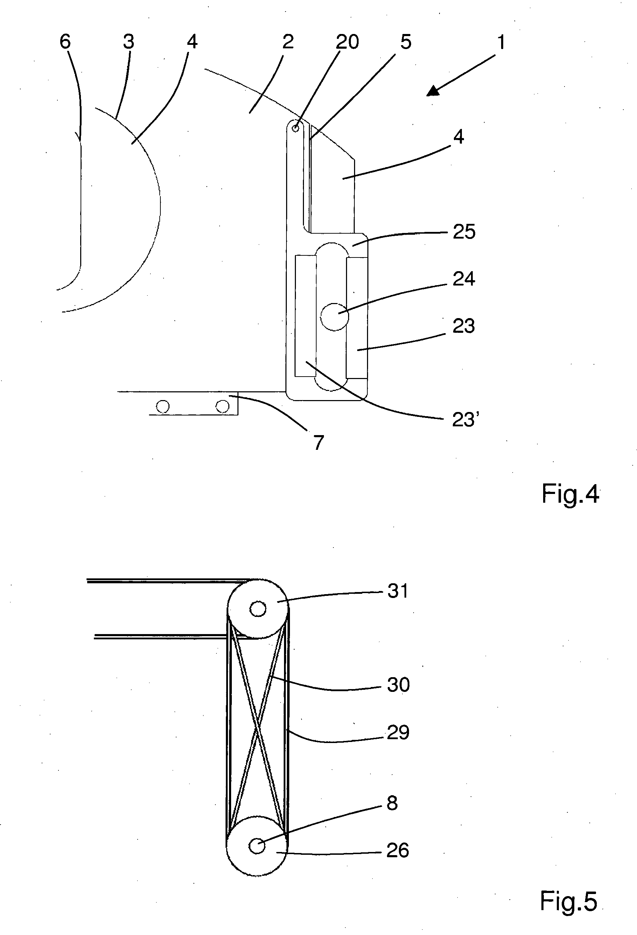

Anstelle von Zahnrädern und Zahnstangen lassen sich auch Reibräder und entsprechende Reibflächen verwenden, sofern mit dem Hebelsystem und dem Federelement ein entsprechender Anpressdruck erzeugt werden kann. Solche äquivalenten Mechanismen sind in Fig. 3 und Fig. 4 dargestellt. In Fig. 3 wird ein Schlitten 22 verwendet, der anstelle von Zahnstangen Reibflächen 23 und 23' aufweist. Anstelle eines Zahnrades wird ein Reibrad 24 verwendet. Bei dem in Figur 3 gezeigten Aufbau sind die Reibflächen 23 und 23' so ausgelegt, dass ihre Normalen in der Blattebene liegen und das Reibrad 24 entweder auf der einen oder der anderen der Flächen abrollt. Das Reibrad 24 selbst ist ober- und unterhalb mit einem Schutz versehen, der die Führung des Reibrades 24 entlang der Reibflächen 23, 23' gewährleisten soll, weshalb das Reibrad 24 in Fig. 3 einen leichten Überstand aufweist.

Der Aufbau der Hebelsysteme kann im wesentlichen identisch erfolgen, wobei es jedoch erforderlich sein kann, gegenüber der Variante mit Zahnrad einen größeren Druck auf die Reibflächen auszuüben, um ein Haften des Reibrades zu gewährleisten; dementsprechend müssen die einzelnen Komponenten angepasst werden.

In Fig. 4 ist eine dem in Fig. 2 gezeigten Kreuztisch 1 mit schwenkbaren Zahnstangen entsprechende Anordnung mit Reibflächen 23, 23' gezeigt, die auf einem schwenkbaren Träger 25 angeordnet sind.

Eine Kombination der verschiedenen Ausgestaltungen ist ohne weiteres möglich, so können beispielsweise im Zusammenhang mit dem Zwischentischabtrieb Zahnstangen und Zahnrad verwendet werden, im Zusammenhang mit dem Obertischelementabtrieb jedoch Reibflächen mit Reibrad, oder umgekehrt. Auch die Verwendung von Schlitten und schwenkbaren Trägern ist im Rahmen der fachüblichen Variationen.

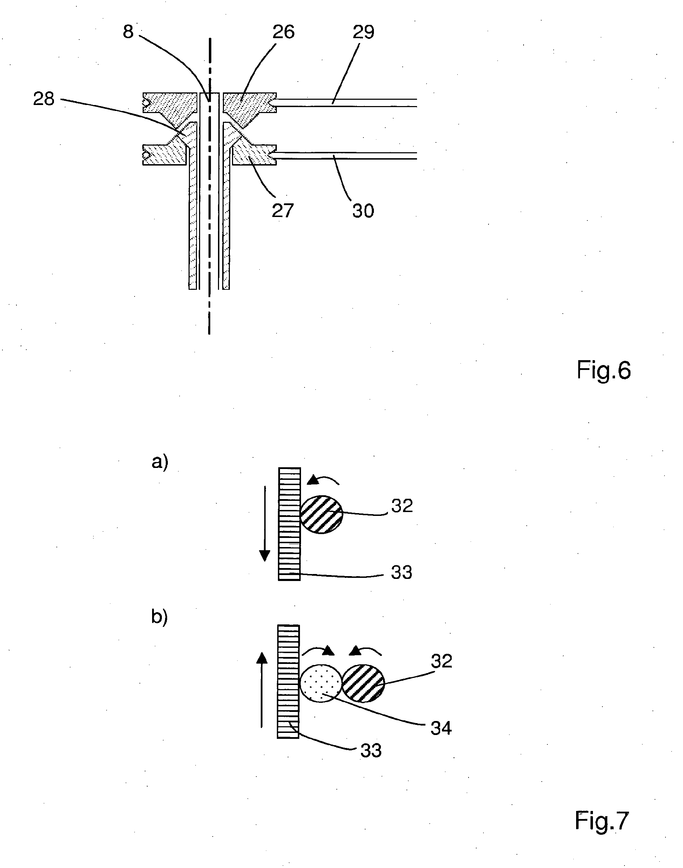

In den Figuren 5 und 6 ist eine alternative Ausgestaltung der Kopplungs- und Umschaltmittel gezeigt, die nicht auf Zahnrädern und Zahnstangen beruht, sondern auf der Verwendung von Seilzügen. Die ersten und zweiten Kopplungsmittel weisen in dieser Ausgestaltung jeweils zwei auf einer Abtriebsachse 8 des Obertischelementabtriebs bzw. des Zwischentischplattenabtriebs frei um die jeweilige Abtriebsachse 8 drehbar gelagerten Abtriebsseilrollen 26, 27 auf. In den Figuren 5 und 6 ist jeweils nur ein Detail der Kopplungs- und Umschaltmittel gezeigt, welche sowohl für die Verschiebung des Obertischelements 7 als auch für die Verschiebung der Zwischentischplatte verwendet werden können. Die Abtriebsseilrollen 26 und 27 sind frei um die Abtriebsachse 8 drehbar, d.h. dass sie grundsätzlich unabhängig von der jeweiligen ersten oder zweiten Triebrichtung gedreht werden können.

Der Obertischelementabtrieb sowie der Zwischentischplattenabtrieb weisen auf der jeweiligen Abtriebsachse 8 außerdem eine Kupplung 28 zum Kuppeln an wahlweise genau eine der beiden Abtriebsseilrollen 26 oder 27 auf. Durch Verschiebung der Kupplung 28 auf der Abtriebsachse 8 wird also entweder die Abtriebsseilrolle 26 oder die Abtriebsseilrolle 27 mit dem entsprechenden Abtrieb gekoppelt und entsprechend der jeweiligen Triebrichtung in Rotation um die Abtriebsachse 8 versetzt. In der in Fig.6 gezeigten Situation ist die Abtriebsseilrolle 27 über die Kupplung 28 mit dem Zwischentischplattenabtrieb bzw. dem Obertischelementabtrieb gekoppelt.

Jede der beiden Abtriebsseilrollen 26, 27 ist aus der jeweiligen Abtriebsachse 8 über eine Seilschlinge 29, 30 mit je einer Seilrolle 31, die Teil eines Verschiebemechanismus zur Verschiebung der Obertischleiste oder einer Obertischplatte bzw. Teil des Verschiebemechanismus zur Verschiebung der Zwischentischplatte 4 ist, verbunden. In jedem der beiden Verschiebemechanismen sind also beide Seilschlingen 29 und 30 jeweils mit derselben Seilrolle 31 verbunden. Alternativ und in der Wirkung äquivalent können pro Verschiebemechanismus auch zwei gekoppelte Seilrollen 31 verwendet werden, dies erhöht allerdings auch den Aufwand. Dabei ist die eine der beiden Seilschlingen, die Seilschlinge 29, gerade angeordnet, die andere der beiden Seilschlingen, die Seilschlinge 30, ist gekreuzt angeordnet. Über die Abtriebsachse 8 wird entweder die eine Abtriebsrolle 26 oder die andere Abtriebsrolle 27 in Drehung versetzt, wobei die Drehung der beiden Abtriebsseilrollen 26, 27 bei konstanter erster bzw. zweiter Triebrichtung gleich ist. Aufgrund der unterschiedlichen Anordnung der Seilschlingen 29, 30 ist jedoch über die eine der beiden Abtriebsrollen 26 eine gleichsinnige Drehung und über die andere der beiden Abtriebsrollen 27 eine gegensinnige Drehung auf die Seilrolle 31 übertragbar. Durch Betätigen der als Kupplungshülse ausgestalteten Kupplung 28 ist dann die jeweilige Verschiebungsrichtung, entweder die erste Verschiebungsrichtung im Falle des Obertischelements 7 bzw. die zweite Verschiebungsrichtung im Falle der Zwischentischplatte 4 umkehrbar.

Der Kreuzungspunkt bei dem Seilzug 30 erscheint dabei nur in der Zeichnung. Tatsächlich ist ein mechanischer Abstand dadurch einzuhalten, dass sich der gekreuzte Seilzug 30 nicht in einer Ebene senkrecht zu der Abtriebsachse 8 und der Drehachse der Seilrolle 31 bewegt. Um entsprechend das Obertischelement 7 bzw. die Zwischentischplatte 4 zu verschieben, können die Seilzüge und Seilrollen auch mit Zahnrädern gekoppelt sein, die dann wieder entsprechend in Zahnstangen eingreifen und die Verschiebung realisieren können. Eine Kombination der verschiedenen Ausführungsformen, die vorangehend beschrieben wurden, ist somit möglich.

Eine weitere alternative Ausgestaltung ist in Fig.7 schematisch dargestellt. Der dargestellte Mechanismus ist ebenfalls sowohl im Falle der Verschiebung des Obertischelements 7 als auch der Zwischentischplatte 4 verwendbar. Sowohl der Obertischelementabtrieb als auch der Zwischentischplattenabtrieb weisen je ein auf einer Abtriebsachse 8 des Obertischelementabtriebs bzw. des Zwischentischplattenabtriebs angeordnetes Abtriebszahnrad 32 auf. Die ersten und zweiten Kopplungsmittel umfassen jeweils eine Zahnstange 33 zum Eingriff in das jeweilige Abtriebszahnrad 32. Die Drehrichtung des Abtriebszahnrades 32, die der Triebrichtung entspricht, und die Verschiebungsrichtung der Zahnstange 33 sind jeweils mit Pfeilen dargestellt. In Fig.7a ist gezeigt, wie das Abtriebszahnrad 32 direkt in die Zahnstange 33 eingreift. Die Zahnstange 33 wird nach unten verschoben. Zur Umschaltung der Verschiebungsrichtung der Zahnstange 33 umfassen die ersten und zweiten Umschaltmittel jeweils ein auf einer der jeweiligen Abtriebsachse 8 parallelen Achse angeordnetes Zwischenzahnrad 34, welches zwischen das Abtriebszahnrad 32 und die Zahnstange 33 zur Umkehrung der entsprechenden Verschiebungsrichtung einbringbar ist. Dies ist in Fig.7b gezeigt, hier ist das Zwischenzahnrad 34 zwischen Zahnstange 33 und Abtriebszahnrad 32 eingebracht, es läuft gegensinnig in bezug auf das Abtriebszahnrad 32 und folglich wird die Verschiebungsrichtung der Zahnstange 33 gegenüber der in Fig.7a dargestellten Verschiebungsrichtung umgekehrt.

Die vorangehend beschriebenen Kreuztische ermöglichen es also ihren Benutzern, beim Wechsel von einem Tubus mit aufrechter Bildlage zu einem Tubus mit invertierter Bildlage durch eine einfache mechanische Umschaltung ihre gewohnten Bewegungsabläufe beispielsweise beim Drehen der Koaxialtriebe beizubehalten.

### Bezugszeichenliste

- 1: Kreuztisch
- 2: Basistischplatte
- 3: Öffnung
- 4: Zwischentischplatte
- 5: zweite Führung
- 6: Öffnung
- 7: Obertischelement
- 8: Abtriebsachse
- 9: Zahnrad
- 10, 10': Zahnstange
- 11: Schlitten
- 12: Schlittenführung
- 13, 14, 15, 16: Hebel
- 17, 18: Drehpunkt
- 19: Federelement
- 20: Drehpunkt
- 21: Träger
- 22: Schlitten
- 23, 23': Reibflächen
- 24: Reibrad
- 25: Träger
- 26, 27: Abtriebsseilrollen
- 28: Kupplung
- 29, 30: Seilschlinge
- 31: Seilrolle
- 32: Abtriebszahnrad
- 33: Zahnstange
- 34: Zwischenzahnrad

## Patentansprüche

1. Kreuztisch (1) für Mikroskope, umfassend
- eine Basistischplatte (2), eine Zwischentischplatte (4) und ein Obertischelement (7), wobei das Obertischelement (7) in einer ersten Führung in der Zwischentischplatte (4) entlang einer ersten Achse (X) verschiebbar gelagert ist und die Zwischentischplatte (4) in einer zweiten Führung (5) in der Basistischplatte (2) entlang einer zweiten Achse (Y), welche mit der ersten Achse (X) einen von Null verschiedenen Winkel einschließt, verschiebbar gelagert ist,
- einen mechanischen Tischtrieb, umfassend einen Obertischelementantrieb und einen damit gekoppelten -abtrieb, sowie einen Zwischentischplattenantrieb und einen damit gekoppelten -abtrieb, wobei mit dem Obertischelementantrieb eine erste Triebrichtung und mit dem Zwischentischplattenantrieb eine zweite Triebrichtung vorgebbar sind,
- erste Kopplungsmittel zur Kopplung des Obertischelementabtriebs mit dem Obertischelement (7), mittels derer das Obertischelement (7) in Abhängigkeit von der ersten Triebrichtung entlang der ersten Achse (X) in einer ersten Verschiebungsrichtung verschiebbar ist,
- zweite Kopplungsmittel zur Kopplung des Zwischentischplattenabtriebs mit der Zwischentischplatte (4), mittels derer die Zwischentischplatte (4) in Abhängigkeit von der zweiten Triebrichtung entlang der zweiten Achse (Y) in einer zweiten Verschiebungsrichtung verschiebbar ist,
- **dadurch gekennzeichnet, dass**
- mechanische erste Umschaltmittel zur Umkehrung der ersten Verschiebungsrichtung bei konstanter erster Triebrichtung und/oder mechanische zweite Umschaltmittel zur Umkehrung der zweiten Verschiebungsrichtung bei konstanter zweiter Triebrichtung vorgesehen sind.

2. Kreuztisch (1) nach Anspruch 1, **dadurch gekennzeichnet, dass** der Obertischelementabtrieb und der Zwischentischplattenabtrieb jeweils ein Zahnrad (9) umfassen, und dass die ersten und zweiten Kopplungsmittel jeweils zwei Zahnstangen (10, 10') zum Eingriff in das zwischen den Zahnstangen (10, 10') angeordnete Zahnrad (9) umfassen, wobei mittels der ersten bzw. zweiten Umschaltmittel entweder die eine oder die andere der beiden jeweiligen Zahnstangen (10, 10') zum Eingriff bringbar ist.

3. Kreuztisch (1) nach Anspruch 2, **dadurch gekennzeichnet, dass** die jeweils zwei Zahnstangen (10, 10') einander gegenüberliegend auf einem Träger in Form eines Schlittens (11) in einer Schlittenführung (12) angeordnet sind und die Umschaltmittel einen oder mehrere Hebel (13, 14, 15, 16) umfassen, mittels derer der Schlitten (11) in der Schlittenführung (12) verschiebbar ist.

4. Kreuztisch (1) nach Anspruch 2, **dadurch gekennzeichnet, dass** die jeweils zwei Zahnstangen (10, 10') auf einem um einen Drehpunkt (20) schwenkbaren Träger (21) einander gegenüberliegend angeordnet sind, und die Umschaltmittel einen oder mehrere Hebel umfassen, mittels derer der Träger (21) schwenkbar ist.

5. Kreuztisch (1) nach Anspruch 1, **dadurch gekennzeichnet, dass**
- die ersten und die zweiten Kopplungsmittel jeweils zwei auf einer Abtriebsachse (8) des Obertischelementabtriebs bzw. des Zwischentischplattenabtriebs frei um die jeweilige Abtriebsachse (8) drehbar gelagerten Abtriebsseilrollen (26, 27) umfassen, und
- der Obertischelementabtrieb sowie der Zwischentischplattenabtrieb auf der jeweiligen Abtriebsachse (8) eine Kupplung (28) zum Kuppeln an wahlweise genau eine der beiden Abtriebsseilrollen (26, 27) aufweist,
- jede der beiden Abtriebsseilrollen (26, 27) auf der jeweiligen Abtriebsachse (8) über eine Seilschlinge (29, 30) mit je einer Seilrolle (31), die Teil eines Verschiebemechanismus zur Verschiebung des Obertischelements (7) bzw. Teil eines Verschiebemechanismus zur Verschiebung der Zwischentischplatte (4) ist, verbunden ist,
- wobei eine der beiden Seilschlingen (29, 30) gerade und die andere gekreuzt angeordnet ist, so dass über die eine der beiden Abtriebsseilrollen (26) eine gleichsinnige Drehung und über die andere der beiden Abtriebsseilrollen (27) eine gegensinnige Drehung auf die jeweilige Seilrolle (31) übertragbar ist, und durch Betätigen der Kupplung die erste bzw. zweite Verschiebungsrichtung umkehrbar ist.

6. Kreuztisch (1) nach Anspruch 1, **dadurch gekennzeichnet, dass**
- der Obertischelementabtrieb und der Zwischentischplattenabtrieb jeweils ein auf einer Abtriebsachse (8) des Obertischelementabtriebs bzw. des Zwischentischplattenabtriebs angeordnetes Abtriebszahnrad (32) aufweisen,
- die ersten und zweiten Kopplungsmittel jeweils eine Zahnstange (33) zum Eingriff in das jeweilige Abtriebszahnrad (32) umfassen, und
- die ersten und zweiten Umschaltmittel jeweils ein auf einer der jeweiligen Abtriebsachse (8) parallelen Achse angeordnetes Zwischenzahnrad (34) umfassen, welches zwischen das Abtriebszahnrad (32) und die Zahnstange (33) zur Umkehrung der entsprechenden Verschiebungsrichtung einbringbar ist.

7. Kreuztisch (1) nach Anspruch 1, **dadurch gekennzeichnet, dass** der Obertischelementabtrieb und der Zwischentischplattenabtrieb jeweils ein Reibrad (24) umfassen, und dass die ersten und zweiten Kopplungsmittel jeweils zwei Reibflächen (23, 23'), auf denen das Reibrad (24) abrollbar ist, umfassen, wobei mittels der ersten bzw. zweiten Umschaltmittel entweder die eine oder die andere der beiden jeweiligen Reibflächen (23, 23') in Kontakt mit dem Reibrad (24) bringbar ist.

8. Kreuztisch (1) nach einem der Ansprüche 1 bis 7, **dadurch gekennzeichnet, dass** das Obertischelement (7) als Obertischplatte oder als eine mit einem Objektführer gekoppelte Obertischleiste ausgestaltet ist.

## Claims

1. A mechanical stage (1) for microscopes, comprising
a base stage plate (2), an intermediate stage plate (4) and an upper stage element (7), where the upper stage element (7) is mounted in a first guideway in the intermediate stage plate (4) so as to be displaceable along a first axis (X), and the intermediate stage plate (4) is mounted in a second guideway (5) in the base stage plate (2) so as to be displaceable along a second axis (Y), which with the first axis (X) includes an angle that is different from zero,
a stage drive mechanism, comprising an upper stage element drive and an upper stage element output coupled to it, and an intermediate stage plate drive and an intermediate stage plate output coupled to it, with the upper stage element drive permitting to select a first drive direction and the intermediate stage plate drive permitting to select a second drive direction,
first coupling means for coupling the upper stage element output with the upper stage element (7), by means of which the upper stage element (7) can, depending on the first drive direction, be displaced along the first axis (X) in a first displacement direction, second coupling means for coupling the intermediate stage plate output with the intermediate stage plate (4), by means of which the intermediate stage plate (4) can, depending on the second drive direction, be displaced along the second axis (Y) in a second displacement direction,
**characterized in that**
mechanical first switching means are provided for reversing the first displacement direction with constant first drive direction, and/or mechanical second switching means are provided for reversing the second displacement direction with constant second drive direction.

2. A mechanical stage (1) as claimed in Claim 1, **characterized in that** the upper stage element output and the intermediate stage plate output each comprise a pinion (9), and **in that** the first and second coupling means each comprise two racks (10, 10') for engaging with the pinion (9) arranged between the racks (10, 10'), so that either the one or the other of the two respective racks (10, 10') can be engaged by means of the first or second switching means, respectively.

3. A mechanical stage (1) as claimed in Claim 2, **characterized in that** the respective two racks (10, 10') are arranged, facing each other, on a carrier in the form of a slide (11) in a slide guide (12), and **in that** the switching means comprise one or several levers (13, 14, 15, 16), by means of which the slide (11) can be displaced in the slide guide (12).

4. A mechanical stage (1) as claimed in Claim 2, **characterized in that** the respective two racks (10, 10') are arranged, facing each other, on a carrier (21) pivotable about a fulcrum (20), and **in that** the switching means comprise one or several levers, by means of which the carrier (21) can be pivoted.

5. A mechanical stage (1) as claimed in Claim 1, **characterized in that** the first and the second coupling means each comprise two output sheaves (26, 27) mounted on an output shaft (8) of the upper stage element output or of the intermediate stage plate output, respectively, so as to be freely rotatable about the respective output shaft (8), and
the upper stage element output as well as the intermediate stage plate output comprise, on the respective output shaft (8), a clutch (28) for selectively engaging exactly one of the two output sheaves (26, 27), and
each of the two output sheaves (26, 27) on the respective output shaft (8) is connected, via a rope loop (29, 30), with a sheave (31) that forms part of a displacement mechanism for displacing the upper stage element (7), or part of a displacement mechanism for displacing the intermediate stage plate (4), respectively,
with one of the two rope loops (29, 30) being arranged straight and the other crossways, so that a rotation is transmitted onto the respective sheave (31) via one of the two output sheaves (26) in the same sense and via the other one of the two output sheaves (27) in the opposite sense, and with the first or second displacement direction, respectively, being reversible by actuation of the clutch.

6. A mechanical stage (1) as claimed in Claim 1, **characterized in that** the upper stage element output and the intermediate stage plate output are each provided with an output pinion (32) arranged on an output shaft (8) of the upper stage element output or of the intermediate stage plate output, respectively,
the first and second coupling means each comprise a rack (33) for engagement with the respective output pinion (32), and
the first and second switching means each comprise an intermediate pinion (34) arranged on a shaft parallel to the respective output shaft (8), this intermediate pinion (34) being engageable between the output pinion (32) and the rack (33) for reversing the respective displacement direction.

7. A mechanical stage (1) as claimed in Claim 1, **characterized in that** the upper stage element output and the intermediate stage plate output each comprise a friction wheel (24), and **in that** the first and second coupling means each comprise two friction surfaces (23, 23'), on which the friction wheel (24) can be rolled, with either the one or the other of the respective two friction surfaces (23, 23') being brought into contact with the friction wheel (24) by means of the first or second switching means, respectively.

8. A mechanical stage (1) as claimed in any one of Claims 1 through 7, **characterized in that** the upper stage element (7) is designed as an upper stage plate, or as an upper stage strip coupled with an object guide.

## Revendications

1. Platine à chariots croisés (1) pour microscopes, comprenant :
- une plaque de platine de base (2), une plaque de platine intermédiaire (4) et un élément de platine supérieur (7), étant entendu que l'élément de platine supérieur (7) est monté dans un premier guide dans la plaque de platine intermédiaire (4) de façon à pouvoir coulisser le long d'un premier axe (X) et la plaque de platine intermédiaire (4) est montée dans un deuxième guide (5) dans la plaque de platine de base (2) de façon à pouvoir coulisser le long d'un deuxième axe (Y) qui forme avec le premier axe (X) un angle différent de zéro,
- un actionnement de platine mécanique comprenant un entraînement et une dérive couplée avec celui-ci pour l'élément de platine supérieur, ainsi qu'un entraînement et une dérive couplée avec celui-ci pour la plaque de platine intermédiaire, étant entendu qu'une première direction d'actionnement peut être prédéfinie avec l'entraînement de l'élément de platine supérieur et une deuxième direction d'entraînement peut être prédéfinie avec la plaque de platine intermédiaire,
- des premiers moyens de couplage pour coupler la dérive de l'élément de platine supérieur avec l'élément de platine supérieur (7), au moyen desquels l'élément de platine supérieur (7) peut être déplacé dans une première direction de coulissement le long du premier axe (X) en fonction de la première direction d'actionnement,
- des deuxièmes moyens de couplage pour coupler la dérive de la plaque de platine intermédiaire avec la plaque de platine intermédiaire (4), au moyen desquels la plaque de platine intermédiaire (4) peut être déplacée dans une deuxième direction de coulissement le long du deuxième axe (Y) en fonction de la deuxième direction d'actionnement,
- **caractérisée**
- **en ce qu'**il est prévu des premiers moyens de commutation mécaniques pour inverser la première direction de coulissement avec une première direction d'actionnement constante et/ou des deuxièmes moyens de commutation mécaniques pour inverser la deuxième direction de coulissement avec une deuxième direction d'actionnement constante.

2. Platine à chariots croisés (1) selon la revendication 1, **caractérisée en ce que** la dérive de l'élément de platine supérieur et la dérive de la plaque de platine intermédiaire comprennent chacune une roue dentée (9) et **en ce que** les premiers et deuxièmes moyens de couplage comprennent chacun deux crémaillères (10, 10') destinées à s'engager dans la roue dentée (9) agencée entre les crémaillères (10, 10'), étant entendu que soit l'une, soit l'autre des deux crémaillères (10, 10') respectives peut être amenée en engagement au moyen des premiers ou des deuxièmes moyens de commutation.

3. Platine à chariots croisés (1) selon la revendication 2, **caractérisée en ce que** les deux crémaillères (10, 10') respectives sont agencées en opposition l'une à l'autre sur un support ayant la forme d'un chariot (11) dans un guide de chariot (12) et les moyens de commutation comprennent un ou plusieurs leviers (13, 14, 15, 16) au moyen desquels le chariot (11) peut être déplacé dans le guide de chariot (12).

4. Platine à chariots croisés (1) selon la revendication 2, **caractérisée en ce que** les deux crémaillères (10, 10') respectives sont agencées en opposition l'une à l'autre sur un support (21) pouvant pivoter autour d'un point de rotation (20) et les moyens de commutation comprennent un ou plusieurs leviers au moyen desquels on peut faire pivoter le support (21).

5. Platine à chariots croisés (1) selon la revendication 1, **caractérisée en ce que** :
- les premiers et les deuxièmes moyens de couplage comprennent chacun deux poulies de dérive (26, 27) montées respectivement sur un axe de dérive (8) de la dérive de l'élément de platine supérieur et de la dérive de la plaque de platine intermédiaire de façon à pouvoir pivoter librement autour de l'axe de dérive (8) respectif, et
- la dérive de l'élément de platine supérieur ainsi que la dérive de la plaque de platine intermédiaire présentent sur leur axe de dérive (8) respectif un couplage (28) destiné au couplage avec précisément l'une des deux poulies de dérive (26, 27) au choix,
- chacune des deux poulies de dérive (26, 27) est reliée sur son axe de dérive (8) respectif, par le biais d'une élingue (29, 30), avec une poulie (31) qui fait partie d'un mécanisme de coulissement destiné à faire coulisser l'élément de platine supérieur (7) ou d'un mécanisme de coulissement destiné à faire coulisser la plaque de platine intermédiaire (4),
- étant entendu que l'une des deux élingues (29, 30) est agencée de façon droite et l'autre de façon croisée, de telle sorte qu'une rotation dans le même sens peut être transmise à la poulie (31) respective par le biais de l'une des deux poulies de dérive (26) et une rotation dans le sens contraire peut lui être transmise par le biais de l'autre des deux poulies de dérive (27), et la première ou deuxième direction de coulissement peut être inversée en actionnant le couplage.

6. Platine à chariots croisés (1) selon la revendication 1, **caractérisée en ce que** :
- la dérive de l'élément de platine supérieur et la dérive de la plaque de platine intermédiaire présentent chacune une roue dentée de dérive (32) agencée respectivement sur l'axe de dérive (8) de la dérive de l'élément de platine supérieur et de la dérive de la plaque de platine intermédiaire,
- les premiers et deuxièmes moyens de couplage comprennent chacun une crémaillère (33) destinée à s'engager dans la roue dentée de dérive (32) respective, et
- les premiers et deuxièmes moyens de commutation comprennent chacun une roue dentée intermédiaire (34) agencée sur un axe parallèle à l'axe de dérive (8) respectif, laquelle peut être amenée entre la roue dentée de dérive (32) et la crémaillère (33) afin d'inverser la direction de coulissement correspondante.

7. Platine à chariots croisés (1) selon la revendication 1, **caractérisée en ce que** la dérive de l'élément de platine supérieur et la dérive de la plaque de platine intermédiaire comprennent chacune une roue de friction (24) et **en ce que** les premiers et deuxièmes moyens de couplage comprennent chacun deux surfaces de friction (23, 23') sur lesquelles la roue de friction (24) peut rouler, étant entendu que soit l'une, soit l'autre des deux surfaces de friction (23, 23') respectives peut être amenée en contact avec la roue de friction (24) au moyen des premiers ou des deuxièmes moyens de commutation.

8. Platine à chariots croisés (1) selon l'une des revendications 1 à 7, **caractérisée en ce que** l'élément de platine supérieur (7) est réalisé en tant que plaque de platine supérieure ou en tant que baguette de platine supérieure couplée avec un guide d'objet.
